# EUROPEAN PATENT APPLICATION

(11) **EP 4 815 620 A1**
(43) Date of publication of application: **30.09.2026**
(21) Application number: 23959491.4
(22) Date of filing: 24.11.2023
(51) Int. Cl.: H04W 80/06, H04W 28/06

(54) **TERMINAL, BASE STATION, AND COMMUNICATION CONTROL METHOD**

(71) Applicant: NTT DOCOMO, INC., Tokyo 100-6150 (JP)
(72) Inventor: MIN, Tianyang, Tokyo 100-6150 (JP); HANAKI, Akihito, Tokyo 100-6150 (JP)
(74) Representative: Hoffmann Eitle
(86) International application number: PCT/JP2023/042166
(87) International publication number: WO 2025/109749

(57) **Abstract**

A terminal according to the present invention comprises: a reception unit that receives, from a base station, change information which indicates a change in packet data convergence protocol sequence number (PDCP SN) length from a currently applied PDCP SN length; and a control unit that applies the change in PDCP SN length without re-establishment of a PDCP, in response to reception of the change information by the reception unit.

## Description

### Technical Field

The present disclosure relates to a terminal, a base station, and a communication control method.

### Background Art

The 3rd Generation Partnership Project (3GPP, a registered trademark) has standardized a 5th generation mobile communication system (also referred to as 5G, New Radio (NR), or Next Generation (NG)), and is further standardizing a next generation system called Beyond 5G, 5G Evolution, or 6G.

5G Evolution and the next-generation 6G communications technology are expected to further enhance the 5G characteristics of "high speed and large capacity," "low latency," and "massive connectivity," while also expanding the technology into new areas such as "expanding communication areas to the sky, sea, and space," "realizing ultra-low power consumption and low-cost communications," and "ultra-reliable communications for industrial applications."

In the current specifications of radio communication systems, a Packet Data Convergence Protocol (PDCP) layer is defined above a Radio Link Control (RLC) layer (see Non-Patent Literature (hereinafter, referred to as NPL) 1).

In a case in which the PDCP is reestablished, such as in a case of handover to another cell or reconnection to a cell, a terminal transmits a PDCP status report to the base station.

The purpose of the PDCP status report is to avoid, for example, duplicate transmission of a protocol data unit (PDU) at the PDCP level, that is, a PDCP PDU, after handover or reconnection of the terminal by reporting a reception state at the PDCP level in the terminal to the base station.

### Citation List

### Non-Patent Literature

NPL 1
3GPP TS 38.323 V17.5.0 (2023-06)

### Summary of Invention

In a future radio communication system, it is expected that data traffic will increase as compared with the current radio communication system due to the above-described technology extension. In this case, it is assumed that the length of a sequence number (SN) of the PDCP PDU is extended (for example, to 32 bits) in order to manage the PDCP PDU. However, no operation related to control in a case in which the length of the PDCP SN is extended is defined. In a case in which such an operation is not appropriately defined, the radio communication system may deteriorate.

An aspect of the present disclosure provides a terminal, a base station, and a communication control method each capable of preventing or reducing deterioration of a radio communication system in a case in which the length of the PDCP SN is extended.

A terminal according to an aspect of the present disclosure includes: a reception section that receives, from a base station, change information indicating a packet data convergence protocol sequence number (PDCP SN) length change from a currently applied PDCP SN length; and a control section that applies the PDCP SN length change without performing PDCP reestablishment in response to the reception section receiving the change information.

### Brief Description of Drawings

FIG. 1 is a diagram illustrating an example of a radio communication system according to an embodiment;
FIG. 2 is a diagram illustrating configuration examples of a radio frame, subframes, and slots used in the radio communication system;
FIG. 3 is a diagram illustrating a protocol stack example of NR;
FIG. 4 is a diagram illustrating a PDCP control PDU format for a PDCP status report;
FIG. 5 is a diagram illustrating a D/C field;
FIG. 6 is a diagram illustrating a PDU Type field;
FIG. 7 is a diagram illustrating an example of a structure of a COUNT value;
FIG. 8 is a diagram illustrating a configuration example of a PDCP control PDU format for a PDCP status report according to the embodiment;
FIG. 9 is a diagram illustrating an example of a structure of a COUNT value according to the embodiment;
FIG. 10 is a diagram illustrating a configuration example of a PDCP control PDU format for PDCP SN length change according to the embodiment;
FIG. 11 is a diagram illustrating another configuration example of the PDCP control PDU format for PDCP SN length change according to the embodiment;
FIG. 12 is a diagram illustrating still another configuration example of the PDCP control PDU format for PDCP SN length change according to the embodiment;
FIG. 13 is a diagram illustrating still another configuration example of the PDCP control PDU format for PDCP SN length change according to the embodiment;
FIG. 14 is a diagram illustrating still another configuration example of the PDCP control PDU format for PDCP SN length change according to the embodiment;
FIG. 15 is a diagram illustrating still another configuration example of the PDCP control PDU format for PDCP SN length change according to the embodiment;
FIG. 16 is a flowchart describing an exemplary operation of a terminal according to the embodiment;
FIG. 17 is a flowchart describing another exemplary operation of the terminal according to the embodiment;
FIG. 18 is a block diagram illustrating an example of a configuration of a base station according to the embodiment;
FIG. 19 is a block diagram illustrating an example of a configuration of the terminal according to the embodiment;
FIG. 20 illustrates an exemplary hardware configuration of the base station and the terminal according to the embodiment; and
FIG. 21 is a diagram illustrating a configuration example of a vehicle.

### Description of Embodiments

Hereinafter, an embodiment according to an aspect of the present disclosure will be described with reference to the drawings.

### <Radio System Configuration>

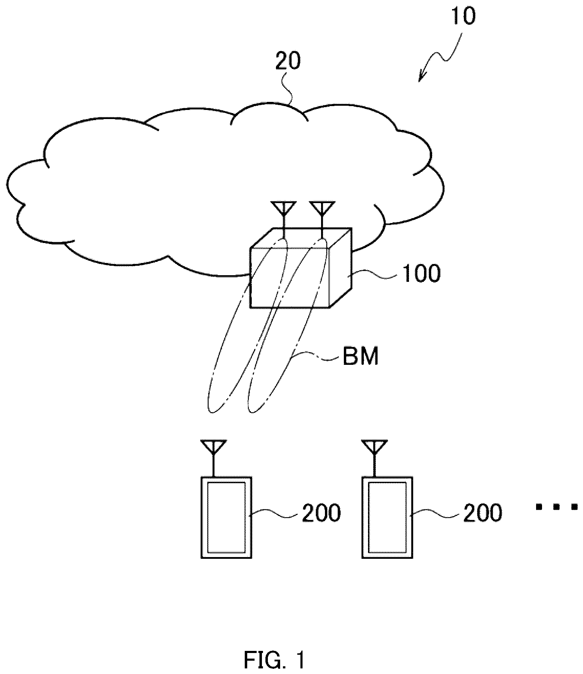

FIG. 1 is a diagram illustrating an example of radio communication system 10 according to the embodiment. Radio communication system 10 is a radio communication system conforming to New Radio (NR), and includes a Next Generation-Radio Access Network (hereinafter, NG-RAN 20 and terminal 200). Radio communication system 10 may be a radio communication system conforming to a scheme called 5G, Beyond 5G, 5G Evolution, or 6G. The terminal is also referred to as User Equipment (UE).

NG-RAN 20 includes base station 100. Base station 100 may be, for example, a gNB or an ng-eNB. NG-RAN 20 is connected to a core network (for example, 5GC, not illustrated) conforming to the NR. NG-RAN 20 and the 5GC may be simply referred to as a network.

Base station 100 is a radio base station conforming to the NR, and executes radio communication conforming to the NR with terminal 200. Base station 100 and terminal 200 control radio signals transmitted from a plurality of antenna elements to handle Massive Multi Input Multi Output (MIMO) for generating a beam having a higher directivity, carrier aggregation (CA) using a plurality of component carriers (CCs) bundled together, dual connectivity (DC) for performing communication between UE and a plurality of NG-RAN nodes simultaneously, and the like.

Radio communication system 10 supports FR1 and FR2. The frequency band of each frequency range (FR) is as follows.
- FR1: 410 MHz to 7.125 GHz
- FR2: 24.25 GHz to 52.6 GHz

In FR1, a sub-carrier spacing (SCS) of 15 kHz, 30 kHz, or 60 kHz may be used, and a bandwidth (BW) of 5 MHz to 100 MHz may be used. FR2 is a higher frequency than FR1, and an SCS of 60 kHz or 120 kHz (240 kHz may be included) may be used, and a bandwidth (BW) of 50 to 400 MHz may be used.

The SCS may be interpreted as a numerology. The numerology is defined in 3GPP TS38.300, and corresponds to one subcarrier spacing in a frequency domain.

Further, radio communication system 10 may support a frequency band higher than the frequency band of the FR2. Specifically, radio communication system 10 may support a frequency band of above 52.6 GHz to 114.25 GHz. Such a high frequency band may be referred to as "FR2x" for convenience. In a case where a band exceeding 52.6 GHz is used, Cyclic Prefix-Orthogonal Frequency Division Multiplexing (CP-OFDM)/Discrete Fourier Transform-Spread-Orthogonal Frequency Division Multiplexing (DFT-S-OFDM) having a larger SCS may be applied.

### <Radio Frame, Subframe, and Slot Structure>

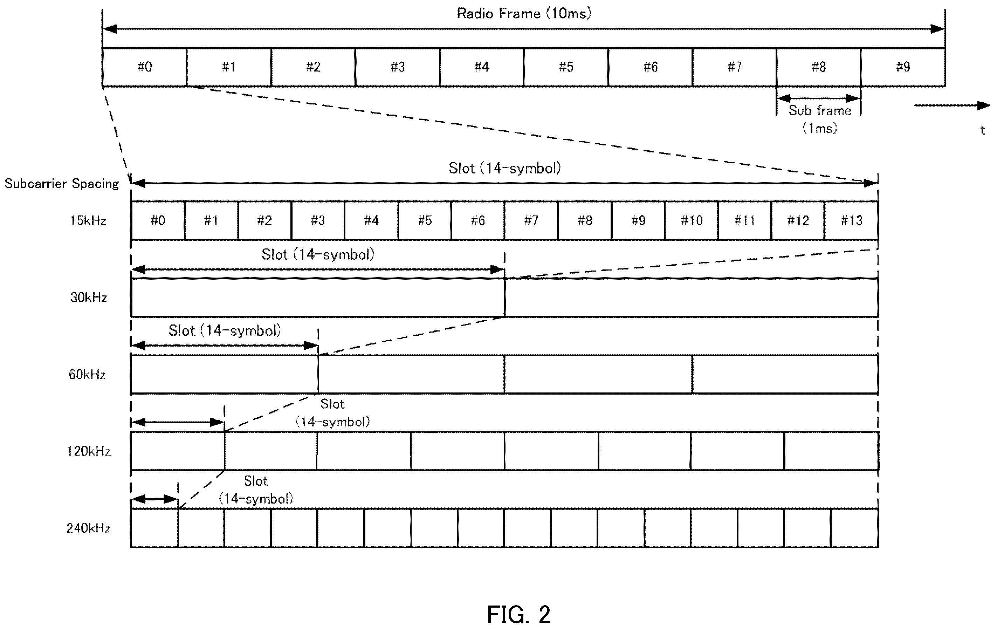

FIG. 2 is a diagram illustrating configuration examples of a radio frame, subframes, and slots used in radio communication system 10. As illustrated in FIG. 2, one slot is configured by 14 symbols, and as the SCS is larger (wider), the symbol period (and the slot period) is shorter. The number of symbols configuring one slot does not necessarily have to be 14 symbols (for example, 28 or 56 symbols). In addition, the number of slots per subframe may be different depending on the SCS. Further, the SCS may be wider than 240 kHz.

The time direction (t) illustrated in FIG. 2 may be referred to as a time region, a time domain, a symbol period, a symbol time, or the like. In addition, the frequency direction may be referred to as a frequency region, a frequency domain, a resource block, a resource block group, a subcarrier, a band width part (BWP), a subchannel, a common frequency resource, or the like.

### <Protocol Stack>

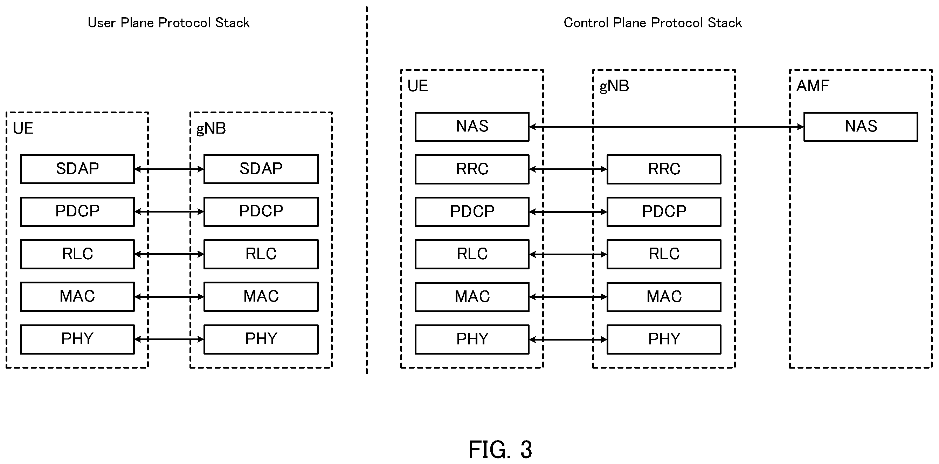

FIG. 3 is a diagram illustrating a protocol stack example of NR. As illustrated in FIG. 3, the protocol stack of NR is divided into a user plane (U-Plane) protocol stack and a control plane (C-Plane) protocol stack.

In the U-Plane protocol stack, user data is processed. The terminal (UE) and the base station (gNB) have a protocol stack of the physical (PHY), the medium access control (MAC), the radio link control (RLC), the packet data convergence protocol (PDCP), and the service data adaptation protocol (SDAP) in the U-Plane protocol stack. L2 (Layer 2) of NR is divided into sublayers of MAC, RLC, PDCP, and SDAP.

In the C-Plane protocol stack, control data such as a signaling message is processed. The terminal and the base station have a protocol stack of the PHY, the MAC, the RLC, the PDCP, and the radio resource control (RRC) in the C-Plane protocol stack. In addition, the terminal and an access and mobility management function (AMF) have a protocol stack of the medium access control (NAS).

### <PDCP Functions>

The PDCP (PDCP layer) supports, for example, the following functions (for example, see Chapter 4.4 of NPL 1).
- transfer of data (U-Plane or C-Plane)
- maintenance of PDCP Sequence Number (SN)
- header compression and decompression using a robust header compression (ROHC) protocol
- header compression and decompression using an ethernet header compression (EHC) protocol
- uplink data compression and decompression using an uplink data compression (UDC) protocol
- ciphering and deciphering
- integrity protection and integrity verification
- timer-based service data unit (SDU) discard
- for split bearers and dual active protocol stack (DAPS) bearer, routing
- duplication
- reordering and in-order delivery (or transmission)
- out-of-order delivery
- duplicate discarding

### <PDCP PDU>

The PDCP Protocol Data Unit (PDU) is divided into a data PDU and a control PDU.

The data PDU includes a PDCP SN. The PDCP SN is assigned in a PDCP entity on a transmission side. The length of the PDCP SN is 12 bits or 18 bits, and the length is configured by a higher layer (pdcp-SN-SizeUL, pdcp-SN-SizeDL, or sl-PDCP-SN-Size). The PDCP SN takes a value in a range of 0 to (2^{pdcp-SN-SizeUL}-1), (2^{pdcp-SN-SizeDL}-1), or (2^{sl-PDCP-SN-Size}-1), is incremented each time the PDCP PDU is generated and transmitted to the RLC layer, and is wrapped around (returns to 0) after being incremented to an upper limit value. The PDCP entity on the transmission side performs ciphering processing and/or processing for tampering detection on a PDCP Service Data Unit (SDU), and transmits a PDCP PDU to which the PDCP SN is assigned as a header to the RLC layer. Meanwhile, the PDCP entity on the reception side performs, for example, deciphering processing and/or tampering detection processing based on the COUNT value and/or the PDCP SN, and determines whether received data is delivered in order, whether there is duplicated data, and the like.

The control PDU is divided into a control PDU for a PDCP status report, a control PDU for interspersed ROHC feedback, a control PDU for EHC feedback, and a control PDU for UDC feedback (for example, see Chapter 6.2.3 of NPL 2). Hereinafter, a format of the control PDU for the PDCP status report will be described.

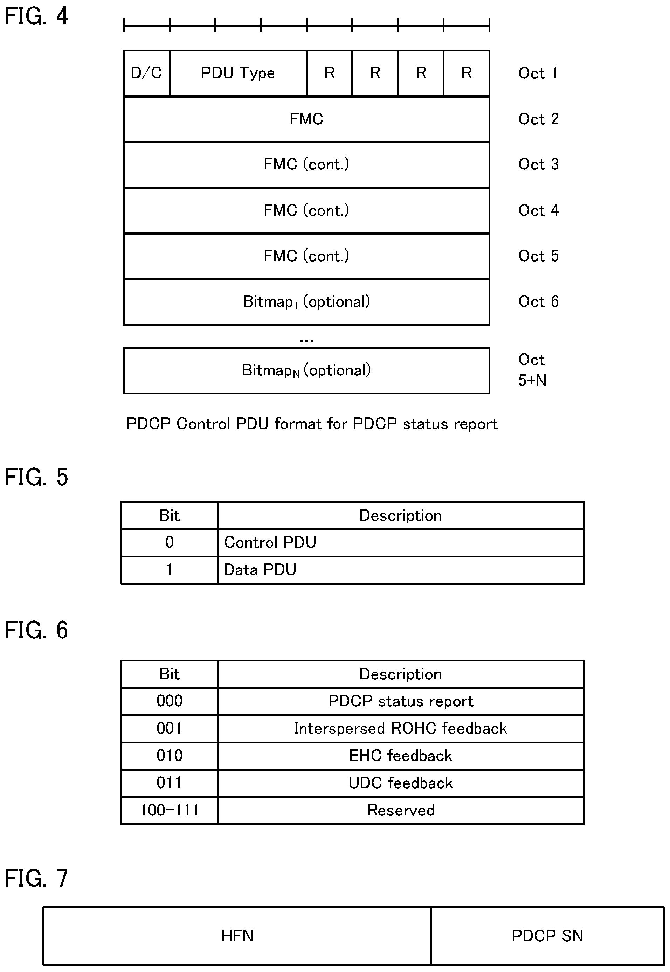

FIG. 4 is a diagram illustrating a PDCP control PDU format for the PDCP status report. As illustrated in FIG. 4, the PDCP control PDU for the PDCP status report inclucdes D/C, PDU Type, R, FMC, and Bitmap fields.

The D/C field indicates whether a corresponding PDCP PDU is a PDCP data PDU or a PDCP control PDU.

FIG. 5 is a diagram illustrating the D/C field. As illustrated in FIG. 5, the D/C field has a 1-bit field. In a case in which the D/C field is "0", it indicates that the corresponding PDCP PDU is a control PDU. In a case in which the D/C field is "1", it indicates that the corresponding PDCP PDU is a data PDU.

Since FIG. 4 illustrates the PDCP control PDU format for the PDCP status report, "0" is stored in the D/C field of FIG. 4.

The PDU Type field indicates a type of control information included in the corresponding PDCP control PDU.

FIG. 6 is a diagram illustrating the PDU Type field. As illustrated in FIG. 6, the PDU Type field has a 3-bit field. In a case in which the PDU Type field is "000", it indicates that the corresponding PDCP control PDU is the control PDU for the PDCP status report. In a case in which the PDU Type field is "001", it indicates that the corresponding PDCP control PDU is the control PDU for the interspersed ROHC feedback. In a case in which the PDU Type field is "010", it indicates that the corresponding PDCP control PDU is the control PDU for the EHC feedback. In a case in which the PDU Type field is "011", it indicates that the corresponding PDCP control PDU is the control PDU for the UDC feedback.

Since FIG. 4 illustrates the PDCP control PDU format for the PDCP status report, "000" is stored in the PDU Type field of FIG. 4.

The R field has a 4-bit field. The R field is a reserved field.

The First Missing COUNT (FMC) field has a 32-bit field. The FMC field indicates a COUNT value (RX_DELIV) of a PDCP SDU that is first (oldest) missing in a reordering window (size: 2^{[pdcp-SN-SizeDL]-1} or 2^{[sl-PDCP-SN-Size]-1}). In other words, the FMC or the RX_DELIV indicates a COUNT value of the first (oldest) PDCP SDU that is not delivered to the highr layer and is still waiting.

As illustrated in FIG. 7, the COUNT value (or simply COUNT) is configured by a hyper frame number (HFN) and a PDCP SN, and has a length of 32 bits. The size of the HFN is a value obtained by subtracting the length (12 bits or 18 bits) of the PDCP SN from 32 bits. The COUNT is not wrapped around.

The Bitmap field includes a variable bit field. The Bitmap field indicates which SDU is missing and which SDU is correctly received by the PDCP entity on the reception side.

### <Consideration>

In a future radio communication system (6G or the like), it is expected that data traffic will increase as compared with the current radio communication system. In this case, it is assumed that the length of the PDCP SN is extended (for example, to 32 bits) in order to manage the PDCP PDU. The "length" may be replaced with "size".

In addition, it is assumed that the length of the COUNT value is also extended (for example, to 64 bits) as the length of the PDCP SN is extended (see FIG. 7).

In a case in which the length of the PDCP SN or the COUNT value is extended, the size of the PDCP control PDU, such as the control PDU for the PDCP status report, increases, and thus the signaling overhead increases (related to the following Proposal 1).

In addition, in a future radio communication system, it is expected that a dynamic range of a throughput will be expanded, and the use of different PDCP lengths is assumed such that a PDCP SN of 32 bits is used in a case of high traffic data and a PDCP SN of 12 bits is used in a case of low traffic data, for example.

In a case in which the PDCP SN length is changed in this way, in the current specification, PDCP reestablishment is required, and as a result, the PDCP entity is reset, and thus delay and loss of data (for example, PDCP data PDU) related to the PDCP may occur (related to the following Proposals 2 and 3). In addition, in a case in which there is a misunderstanding in recognition of a timing at which the PDCP SN length change is applied or executed between the terminal and the base station, communication may not be appropriately performed (related to the following Proposal 3).

Therefore, in a case in which an operation related to the length of the PDCP SN or the COUNT value is not appropriately defined, the performance of the radio communication system may deteriorate due to an increase in the signaling overhead, delay, loss, or the like.

Therefore, hereinafter, descriptions will be given of proposals (Proposals 1 to 3) for dealing with the problems as described above in a case in which the length of the PDCP SN is extended.

As a premise of the proposals described below, for example, the maximum value of an RRC parameter pdcp-SN-SizeUL, pdcp-SN-SizeDL, and/or sl-PDCP-SN-Size (that is, the length of the PDCP SN) in a PDCP-Config information element and an SL-PDCP-Config information element may be extended. For example, 32 bits (for example, len32bits), 64 bits (for example, len64bits), or the like may be defined as the maximum value of the pdcp-SN-SizeUL, the pdcp-SN-SizeDL, and/or the sl-PDCP-SN-Size. For example, the pdcp-SN-SizeUL, the pdcp-SN-SizeDL, and/or the sl-PDCP-SN-Size may be selected from 12 bits, 18 bits, and 32 bits. The PDCP-Config information element and the SL-PDCP-Config information element may be referred to as (configuration) information related to the PDCP, and the pdcp-SN-SizeUL, the pdcp-SN-SizeDL, and the sl-PDCP-SN-Size may be referred to as (configuration) information indicating the length of the PDCP SN, (configuration) information related to the length of the PDCP SN, (configuration) information related to the PDCP, and the like. For example, base station 100 may transmit the configuration information related to the PDCP to terminal 200, and terminal 200 may receive the configuration information related to the PDCP from base station 100.

### <Proposal 1>

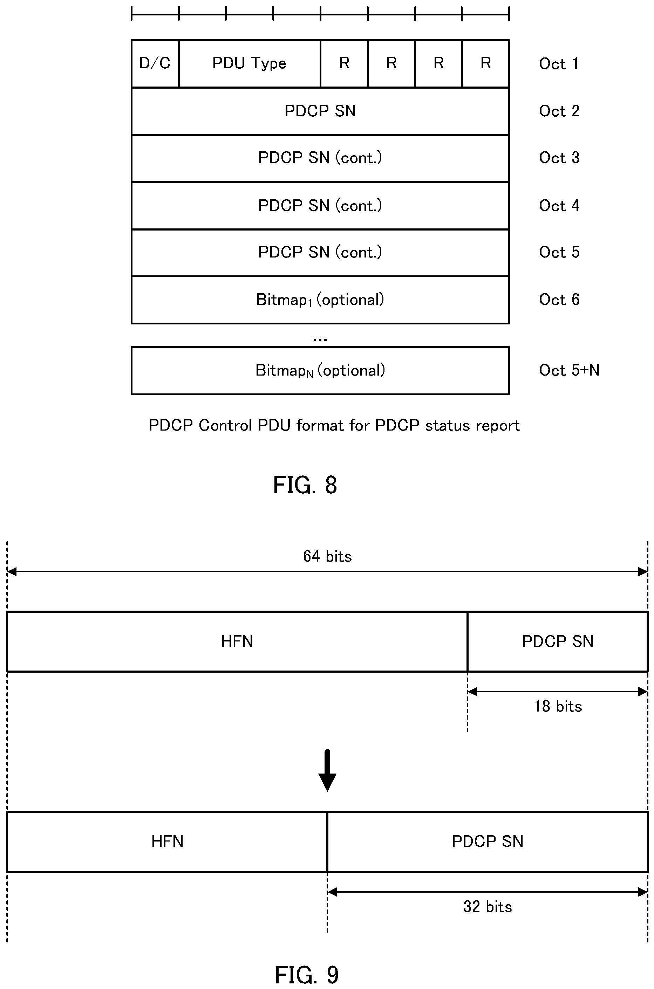

In a case in which the length of the PDCP SN and the length of the COUNT value are extended, the size of the FMC field of the PDCP status report increases (for example, it is considered to increase from current 32 bits to 64 bits). In order to deal with this, terminal 200 may transmit, for example, upon handover or reconnection, the PDCP status report using a PDCP SN field instead of the FMC field to base station 100 (for example, target base station (node) 100) as illustrated in FIG. 8. As described above, since the FMC, that is, the COUNT is configured by the HFN and the PDCP SN, the length of the PDCP SN is shorter than the length of the FMC (COUNT). Therefore, in a case in which the COUNT value is extended from the current 32 bits, the increase in the signaling overhead can be reduced by using the PDCP SN field instead of the FMC field. Note that the PDCP status report may be simply referred to as a status report or the like, and the PDCP SN may be referred to as identification information, an identification number, an identifier, or the like of data or a data packet.

In addition, for example, the length of the PDCP SN field (that is, the PDCP SN) may be 32 bits. By setting the PDCP SN field to 32 bits, the format (size portion) in the current specification can be used as the PDCP control PDU format for the PDCP status report, and the influence (change) in the specification can be reduced.

In addition, terminal 200 may transmit the HFN portion constituting the FMC (COUNT) to base station 100 via the RRC (as an RRC parameter).

Meanwhile, when, for example, starting the PDCP reestablishment, base station 100 may receive the PDCP status report using the PDCP SN field instead of the FMC field from terminal 200. In addition, base station 100 may receive the HFN from terminal 200 via the RRC (as an RRC parameter).

In this way, the PDCP SN is transmitted from terminal 200 to base station 100 via the PDCP status report, and the HFN is transmitted from terminal 200 to base station 100 via the RRC, so that terminal 200 and base station 100 can share the COUNT value and appropriately perform communication (retransmission control or the like).

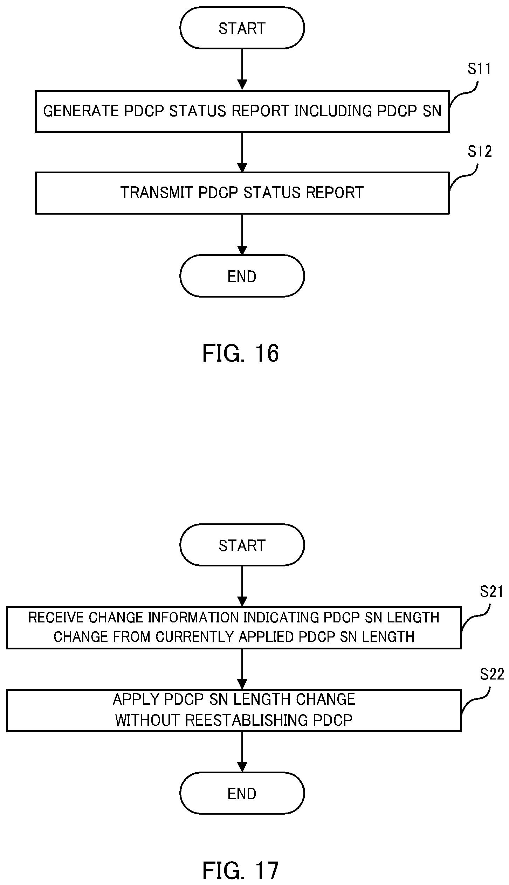

Next, an operation example of terminal 200 according to the present embodiment based on Proposal 1 will be described with reference to FIG. 16.

For example, upon handover or reconnection, in step S11, terminal 200 generates the PDCP status report including the PDCP SN instead of the COUNT value including the PDCP SN.

In step S12, terminal 200 transmits the generated PDCP status report to base station 100.

According to Proposal 1, the PDCP status report using the PDCP SN having a smaller size than the FMC is transmitted instead of the FMC, so that the increase in the signaling overhead can be reduced and the deterioration of the performance of the radio communication system can be prevented or reduced.

### <Proposal 2>

Terminal 200 (and base station 100) need not perform the PDCP reestablishment (need not perform the PDCP reestablishment procedure) when the PDCP SN length change is applied (or executed) (or when the PDCP SN length is changed). In other words, terminal 200 (and base station 100) may apply the PDCP SN length change without performing the PDCP reestablishment. The procedure according to Proposal 2 described below may be referred to as a PDCP SN length change procedure or the like. Therefore, terminal 200 (and base station 100) may perform the PDCP SN length change procedure without performing the PDCP reestablishment. In addition, in Proposal 2, the expression "apply the PDCP SN length change (or change the PDCP SN length)" described below or a similar expression may be replaced with an expression "determine to apply the PDCP SN length change (or to change the PDCP SN length)" or a similar expression.

### (Option 2-1)

The PDCP SN length may be changed via the RRC. In a case in which the PDCP SN length (for example, pdcp-SN-SizeUL, pdcp-SN-SizeDL, or the like) is reconfigured to, for example, 32 bits from 18 bits (in a case in which terminal 200 receives reset information indicating the PDCP SN length from base station 100), terminal 200 (and base station 100) may apply the PDCP SN length change (the PDCP SN length may be applied to the reset 32 bits) without performing the PDCP reestablishment.

In a case in which the PDCP SN length is changed (for example, from 18 bits to 32 bits), the COUNT value itself may use the same value as before the change. For example, in a case in which the length of the COUNT value is extended from the current 32 bits to 64 bits, the COUNT value itself may remain unchanged as before the change, and only the division (boundary) between the HFN and the PDCP SN in the COUNT may be changed as illustrated in FIG. 9. In this way, in a case in which the COUNT value is extended, the size of the HFN is a value obtained by subtracting the length (12 bits, 18 bits, 32 bits, or the like) of the PDCP SN from the length (for example, 64 bits) of the COUNT value.

### (Option 2-2)

The PDCP SN length may be changed via the PDCP control PDU. For example, terminal 200 may receive the PDCP control PDU as described below from base station 100 and apply the PDCP SN length change based on the received PDCP control PDU without performing the PDCP reestablishment.

### [Example of PDCP Control PDU Format]

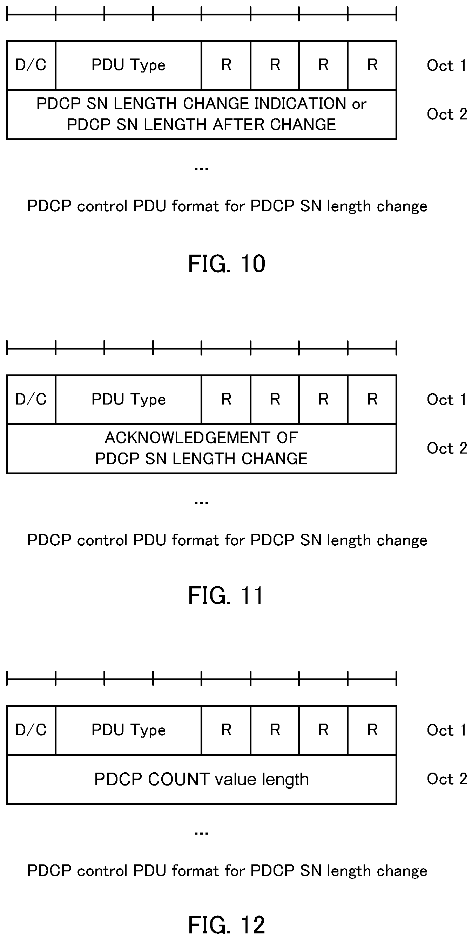

FIGS. 10 to 15 are diagrams illustrating examples of the PDCP control PDU format used for changing the PDCP SN length.

In one example, the PDCP control PDU may be used for a change indication of the PDCP SN length or a PDCP SN length after the change. For example, as illustrated in FIG. 10, the format of the PDCP control PDU transmitted from base station 100 to terminal 200 may include a field indicating a change indication of the PDCP SN length or a PDCP SN length after the change in Oct 2. In a case in which the field indicating the change indication of the PDCP SN length is used, for example, two PDCP SN lengths may be set in advance, and the PDCP SN length may be switched each time there is the change indication of the PDCP SN length.

In one example, the PDCP control PDU may be used for an acknowledgement (confirmation (response)) of the change of the PDCP SN length. For example, as illustrated in FIG. 11, the format of the PDCP control PDU transmitted from terminal 200 to base station 100 may include a field indicating the acknowledgement of the change of the PDCP SN length in Oct 2.

For example, in a case in which the PDCP control PDU illustrated in FIG. 10 is transmitted from base station 100 to terminal 200 and, in response, the PDCP control PDU illustrated in FIG. 11 is transmitted from terminal 200 to base station 100, the PDCP SN length change may be applied.

In one example, the PDCP control PDU may be used for a PDCP COUNT value length. For example, as illustrated in FIG. 12, the format of the PDCP control PDU transmitted from base station 100 to terminal 200 may include a field indicating the PDCP COUNT value length in Oct 2.

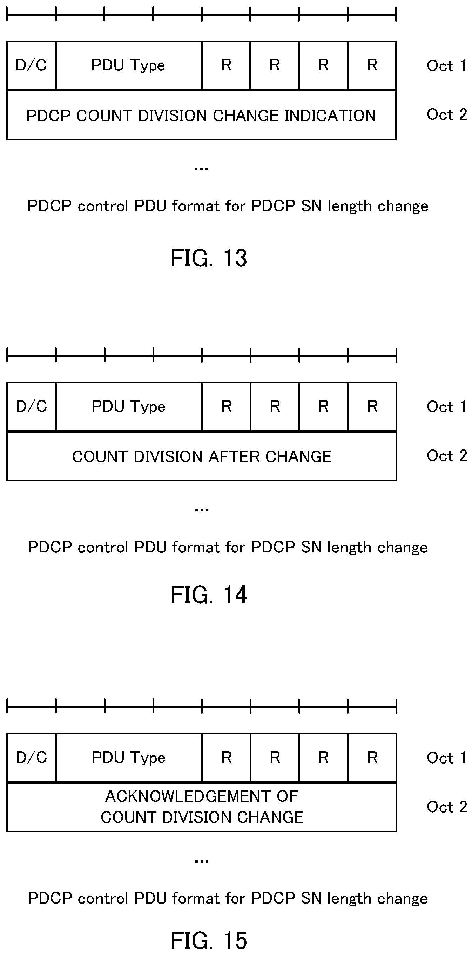

In one example, the PDCP control PDU may be used for a PDCP COUNT division change indication. For example, as illustrated in FIG. 13, the format of the PDCP control PDU transmitted from base station 100 to terminal 200 may include a field indicating the PDCP COUNT division change indication in Oct 2. In this case, for example, two PDCP COUNT divisions (positions) may be set in advance, and the PDCP COUNT division (position) may be switched each time there is the PDCP COUNT division change indication.

In one example, the PDCP control PDU may be used for a PDCP COUNT division after the change. For example, as illustrated in FIG. 14, the format of the PDCP control PDU transmitted from base station 100 to terminal 200 may include a field indicating the PDCP COUNT division (position) after the change in Oct 2.

In one example, the PDCP control PDU may be used for an acknowledgement of the change of the COUNT division. For example, as illustrated in FIG. 15, the format of the PDCP control PDU transmitted from terminal 200 to base station 100 may include a field indicating the acknowledgement of the change of the COUNT division in Oct 2.

For example, in a case in which the PDCP control PDU illustrated in FIG. 12, FIG. 13, or FIG. 14 is transmitted from base station 100 to terminal 200 and, in response, the PDCP control PDU illustrated in FIG. 15 is transmitted from terminal 200 to base station 100, the change of the COUNT division (therefore, the PDCP SN length change) may be applied.

The PDCP control PDU illustrated in FIGS. 10, 12, 13, and 14 may be transmitted from terminal 200 to base station 100, and the PDCP control PDU illustrated in FIGS. 11 and 15 may be transmitted from base station 100 to terminal 200. In this case, for example, in a case in which the PDCP control PDU illustrated in FIG. 10 is transmitted from terminal 200 to base station 100 and, in response, the PDCP control PDU illustrated in FIG. 11 is transmitted from base station 100 to terminal 200, the PDCP SN length change may be applied. Similarly, for example, in a case in which the PDCP control PDU illustrated in FIG. 12, FIG. 13, or FIG. 14 is transmitted from terminal 200 to base station 100 and, in response, the PDCP control PDU illustrated in FIG. 15 is transmitted from base station 100 to terminal 200, the change of the COUNT division (therefore, the PDCP SN length change) may be applied.

The setting information indicating the PDCP SN length described above and the PDCP control PDU may be referred to as change information indicating the PDCP SN length change from the currently applied PDCP SN length, information related to the PDCP SN length change, information related to the PDCP SN length, information related to the PDCP, and the like.

Meanwhile, base station 100 may determine to apply the PDCP SN length change from the currently applied PDCP SN, apply the PDCP SN length change without performing the PDCP reestablishment, and transmit the change information indicating the PDCP SN length change from the currently applied PDCP SN length to terminal 200.

Next, an operation example of terminal 200 according to the present embodiment based on Proposal 2 will be described with reference to FIG. 17.

In step S21, terminal 200 receives the change information indicating the PDCP SN length change from the currently applied PDCP SN length from base station 100.

In step S22, terminal 200 applies the PDCP SN length change in response to the reception of the change information in step S21 without performing the PDCP reestablishment.

According to Proposal 2, since the PDCP SN length can be changed by the RRC or the PDCP control PDU without the need for the PDCP reestablishment, the delay and loss of the data related to the PDCP can be prevented or reduced, and the deterioration of the performance of the radio communication system can be prevented or reduced.

### <Proposal 3>

In relation to Proposal 2, in a case in which the PDCP SN length is changed without the PDCP reestablishment, the problem is whether the change is applied with synchronization (at which timing) or without synchronization (at which timing), and in a case of with synchronization, how to synchronize the change. Therefore, in the present proposal, options (options 3-1 to 3-4) for dealing with this problem will be described. Before the processing or the exchange according to Proposal 3 described below occurs, the processing or the exchange according to Proposal 2 described above (for example, the processing illustrated in FIG. 17) may be already performed.

### (Option 3-1)

In a case in which the PDCP SN length change is synchronized, the timing at which the PDCP SN length change is applied may be indicated. For example, terminal 200 may receive control information for indicating the timing from base station 100. In addition, for example, terminal 200 may transmit control information for indicating the timing to base station 100. Terminal 200 and base station 100 may apply the PDCP SN length change at the timing based on the control information for indicating the timing.

### (Option 3-2)

In a case in which the PDCP SN length change is synchronized, the PDCP SN length may be changed at the time of the RRC reconfiguration. For example, the PDCP SN length may be changed at the time of reconfiguration with synchronization (reconfigurationWithSync). For example, terminal 200 may receive a reconfigurationWithSync information element from base station 100 and may apply the PDCP SN length change at the timing of receiving the information element, and base station 100 may apply the PDCP SN length change at the timing of transmitting the information element.

### (Option 3-3)

In a case in which the PDCP SN length change is not synchronized, a flag indicating the PDCP SN length or a flag indicating the PDCP SN length change may be provided in the PDCP data PDU header. For example, the flag may correspond to a predetermined reserved field in the PDCP data PDU format in the current specification. For example, terminal 200 may receive the PDCP data PDU in which the flag is set from base station 100 and may apply the PDCP SN length change at the timing of receiving the PDCP data PDU, and base station 100 may apply the PDCP SN length change at the timing of transmitting the PDCP data PDU. In addition, for example, base station 100 may receive the PDCP data PDU in which the flag is set from terminal 200 and may apply the PDCP SN length change at the timing of receiving the PDCP data PDU, and terminal 200 may apply the PDCP SN length change at the timing of transmitting the PDCP data PDU.

### (Option 3-4)

In a case in which the PDCP SN length change is not synchronized, the transmission of new data (for example, new PDCP data PDU) may be stopped until the PDCP SN length change procedure described above is completed. For example, base station 100 does not transmit new data to terminal 200 until the PDCP SN length change procedure described above is completed, and terminal 200 may assume that base station 100 does not transmit new data until the PDCP SN length change procedure described above is completed. In addition, terminal 200 may assume that the PDCP SN length is changed for new data received after the PDCP SN length change procedure described above is completed, and thus may apply the PDCP SN length change at the timing of first receiving the PDCP data PDU after receiving the change information described above in Proposal 2. In addition, for example, terminal 200 does not transmit new data to base station 100 until the PDCP SN length change procedure described above is completed, and base station 100 may assume that terminal 200 does not transmit new data until the PDCP SN length change procedure described above is completed. In addition, base station 100 may assume that the PDCP SN length is changed for new data received after the PDCP SN length change procedure described above is completed, and thus may apply the PDCP SN length change at the timing of first receiving the PDCP data PDU after receiving the change information described above in Proposal 2.

The control information for indicating the timing at which the PDCP SN length change is applied and the reconfigurationWithSync information element described above may be referred to as timing information indicating the timing at which the PDCP SN length change is applied, timing information related to the timing at which the PDCP SN length change is applied, information related to the PDCP SN length change, or the like. The PDCP data PDU may be referred to as data, PDCP data, a data packet, a PDCP data packet, or the like.

Next, configurations of base station 100 and terminal 200 will be described. The configurations of base station 100 and terminal 200 described below are examples of functions related to the present embodiment. Base station 100 and terminal 200 may have functions not illustrated. Names of functional categories and/or functional units are not limited as long as the functions are for executing operations according to the present embodiment.

### <Configuration of Base Station>

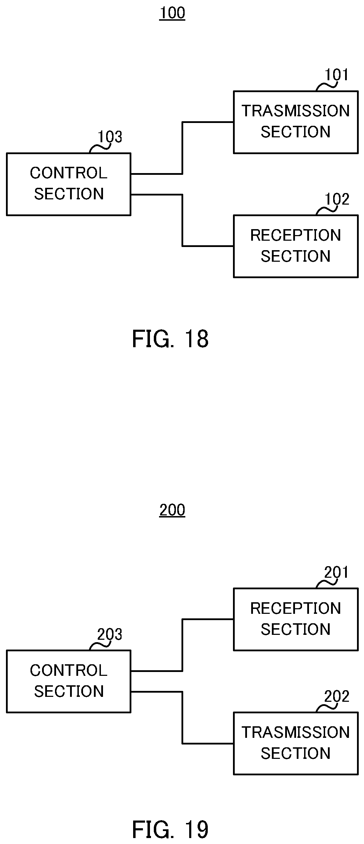

FIG. 18 is a block diagram illustrating an example of a configuration of base station 100 according to the present embodiment. Base station 100 includes, for example, transmission section 101, reception section 102, and control section 103. Base station 100 communicates with terminal 200 (see FIG. 19) by radio.

Transmission section 101 transmits a downlink (DL) signal to terminal 200. For example, transmission section 101 transmits the DL signal under the control of control section 103.

For example, transmission section 101 may transmit the (setting) information related to the PDCP, the change information indicating the PDCP SN length change from the currently applied PDCP SN length, the timing information indicating the timing at which the PDCP SN length change is applied, a PDCP data packet including the information (flag or the like) indicating the PDCP SN length, a PDCP data packet, or the like to terminal 200.

The DL signal may include, for example, a downlink data signal and control information (for example, downlink control information (DCI)). In addition, the DL signal may include information (for example, UL grant) indicating scheduling of the signal transmission of terminal 200. In addition, the DL signal may include control information of a higher layer (for example, control information of radio resource control (RRC)). In addition, the DL signal may include a reference signal.

The channel used for the transmission of the DL signal includes, for example, a downlink data channel and a downlink control channel. For example, the downlink data channel may include a physical downlink shared channel (PDSCH), and the downlink control channel may include a physical downlink control channel (PDCCH). For example, base station 100 transmits the downlink control information to terminal 200 using the PDCCH, and transmits the downlink data signal using the PDSCH.

The reference signal included in the DL signal may include, for example, at least one of a demodulation reference signal (DMRS), a phase tracking reference signal (PTRS), a channel state information-reference signal (CSI-RS), a sounding reference signal (SRS), or a positioning reference signal (PRS) for position information. For example, the reference signal such as the DMRS and the PTRS is used for demodulating the downlink data signal, and is transmitted using the PDSCH.

Reception section 102 receives an uplink (UL) signal transmitted from terminal 200. For example, reception section 102 receives a UL signal under the control of control section 103.

For example, reception section 102 may receive, from terminal 200, the PDCP status report (for example, in response to the start of the PDCP reestablishment) including the PDCP SN instead of the COUNT value including the PDCP SN, the RRC parameter indicating the hyper frame number included in the COUNT value, the PDCP data packet including the information (flag or the like) indicating the PDCP SN length, the PDCP data packet, or the like.

Transmission section 101 and reception section 102 may be collectively referred to as a communication section.

Control section 103 controls a communication operation of base station 100 including a transmission process of transmission section 101 and a reception process of reception section 102.

For example, control section 103 acquires information such as data and control information from a higher layer, and outputs the information to transmission section 101. In addition, control section 103 outputs the data and the control information received from reception section 102 to the higher layer.

For example, control section 103 performs allocation of a resource (or a channel) used for the transmission and reception of the DL signal and/or a resource used for the transmission and reception of the UL signal based on the signal (for example, data and control information) received from terminal 200 and/or the data and the control information acquired from the higher layer. The information related to the allocated resource may be included in the control information transmitted to terminal 200.

For example, control section 103 may perform the PDCP reestablishment including starting the PDCP reestablishment. In addition, for example, control section 103 may apply the PDCP SN length change from the currently applied PDCP SN length without performing the PDCP reestablishment.

### <Configuration of Terminal>

FIG. 19 is a block diagram illustrating an example of a configuration of terminal 200 according to the present embodiment. Terminal 200 includes, for example, reception section 201, transmission section 202, and control section 203. Terminal 200 communicates with base station 100 by radio, for example.

Reception section 201 receives a DL signal transmitted from base station 100. For example, under the control of control section 203, reception section 201 receives a DL signal.

For example, reception section 201 may receive the (setting) information related to the PDCP, the change information indicating the PDCP SN length change from the currently applied PDCP SN length, the timing information indicating the timing at which the PDCP SN length change is applied, the PDCP data packet including the information (flag or the like) indicating the PDCP SN length, the PDCP data packet, or the like from base station 100.

Transmission section 202 transmits a UL signal to base station 100. For example, transmission section 202 transmits a UL signal under the control of control section 203.

For example, transmission section 202 may transmit the PDCP status report including the PDCP SN (for example, its length is 32 bits) instead of the COUNT value including the PDCP SN, the RRC parameter indicating the hyper frame number included in the COUNT value, the PDCP data packet including the information (flag or the like) indicating the PDCP SN length, the PDCP data packet, or the like to base station 100.

The UL signal may include, for example, an uplink data signal and control information (for example, UCI). For example, information (for example, UE capability) related to the processing capability of terminal 200 may be included. In addition, the UL signal may include a reference signal.

The channel used for the transmission of the UL signal includes, for example, an uplink data channel and an uplink control channel. For example, the uplink data channel may include a physical uplink shared channel (PUSCH), and the uplink control channel may include a physical uplink control channel (PUCCH). For example, terminal 200 transmits the uplink control information to base station 100 using the PUCCH, and transmits the data signal of the uplink using the PUSCH.

The reference signal included in the UL signal may include, for example, at least one of a DMRS, a PTRS, a CSI-RS, an SRS, or a PRS. For example, the reference signal such as the DMRS and the PTRS is used for demodulating the data signal of the uplink, and is transmitted using the uplink channel (for example, PUSCH).

Reception section 201 and transmission section 202 may be collectively referred to as a communication section.

Control section 203 controls a communication operation of terminal 200 including a reception process in reception section 201 and a transmission process in transmission section 202.

For example, control section 203 acquires information such as data and control information from a higher layer, and outputs the information to transmission section 202. In addition, control section 203, for example, outputs the data and the control information received by reception section 201 to the higher layer.

For example, control section 203 controls transmission of information to be fed back to base station 100. The information to be fed back to base station 100 may include, for example, HARQ-ACK, channel state information (CSI), or a scheduling request (SR). The information to be fed back to base station 100 may be included in the UCI.

For example, control section 203 may generate the PDCP status report including the PDCP SN instead of the COUNT value including the PDCP SN. In addition, for example, control section 203 may apply the PDCP SN length change without performing the PDCP reestablishment in response to the reception of the change information indicating the PDCP SN length change from the currently applied PDCP SN length by reception section 201. In addition, for example, control section 203 may apply the PDCP SN length change at the timing indicated by the timing information received by reception section 201. In addition, for example, control section 203 may apply the PDCP SN length change at the timing of receiving the PDCP data packet including the information (flag or the like) indicating the PDCP SN length after the reception of the change information by reception section 201. In addition, for example, control section 203 may apply the PDCP SN length change at the timing indicated by the timing information received by reception section 201. In addition, for example, control section 203 may apply the PDCP SN length change at the timing of first receiving the PDCP data packet after the reception of the change information by reception section 201.

The channel used for the transmission of the DL signal and the channel used for the transmission of the UL signal are not limited to the above-described examples. For example, the channel used for the transmission of the DL signal and the channel used for the transmission of the UL signal may include a random access channel (RACH) and a physical broadcast channel (PBCH). The RACH may be used for transmission of downlink control information (DCI) including, for example, a random access radio network temporary identifier (RA-RNTI).

With the above configuration, the deterioration of the radio communication system can be prevented or reduced in a case in which the length of the PDCP SN is extended.

### <Summary of Embodiment>

As described above, according to one aspect of the present disclosure, a terminal is provided that includes: a control section that generates a packet data convergence protocol (PDCP) status report including a PDCP sequence number (SN) instead of a COUNT value including the PDCP SN; and a transmission section that transmits the PDCP status report to a base station.

With the above configuration, the increase in the signaling overhead can be reduced, and the deterioration of the performance of the radio communication system can be prevented or reduced.

In one example, the PDCP SN has a length of 32 bits.

With the above configuration, the influence (change) in the specification can be reduced.

In one example, the transmission section transmits a radio resource control (RRC) parameter indicating a hyper frame number included in the COUNT value to the base station.

With the above configuration, the terminal and the base station can share the COUNT value.

According to one aspect of the present disclosure, a base station is provided that includes: a control section that starts PDCP reestablishment; and a reception section that receives, in response to a start of the PDCP reestablishment, a PDCP status report including a PDCP SN instead of a COUNT value including the PDCP SN from a terminal.

With the above configuration, the increase in the signaling overhead can be reduced, and the deterioration of the performance of the radio communication system can be prevented or reduced.

According to one aspect of the present disclosure, a communication control method is provided that includes: generating, by a terminal, a PDCP status report including a PDCP SN instead of a COUNT value including the PDCP SN; and transmitting, by the terminal, the PDCP status report to a base station.

With the above configuration, the increase in the signaling overhead can be reduced, and the deterioration of the performance of the radio communication system can be prevented or reduced.

According to one aspect of the present disclosure, a terminal is provided that includes: a reception section that receives, from a base station, change information indicating a packet data convergence protocol sequence number (PDCP SN) length change from a currently applied PDCP SN length; and a control section that applies the PDCP SN length change without performing PDCP reestablishment in response to the reception section receiving the change information.

With the above configuration, the delay and loss of the data related to the PDCP can be prevented or reduced, and the deterioration of the performance of the radio communication system can be prevented or reduced.

In one example, the reception section receives, from the base station, timing information indicating a timing to apply the PDCP SN length change, and the control section applies the PDCP SN length change at the timing indicated by the timing information.

With the above configuration, the PDCP SN length change can be applied between the terminal and the base station without a misunderstanding in recognition.

In one example, the control section applies the PDCP SN length change at a timing when the reception section receives a PDCP data packet including information indicating a PDCP SN length after receiving the change information from the base station.

With the above configuration, the PDCP SN length change can be applied between the terminal and the base station without a misunderstanding in recognition.

In one example, the control section applies the PDCP SN length change at a timing when the reception section first receives a PDCP data packet after receiving the change information from the base station.

With the above configuration, the PDCP SN length change can be applied between the terminal and the base station without a misunderstanding in recognition.

According to one aspect of the present disclosure, a base station is provided that includes: a control section that applies a PDCP SN length change from a currently applied PDCP SN length without performing PDCP reestablishment; and a transmission section that transmits change information indicating the PDCP SN length change to a terminal.

With the above configuration, the delay and loss of the data related to the PDCP can be prevented or reduced, and the deterioration of the performance of the radio communication system can be prevented or reduced.

According to one aspect of the present disclosure, a communication control method is provided that includes receiving, by a terminal from a base station, change information indicating a PDCP SN length change from a currently applied PDCP SN length; and applying, by the terminal, the PDCP SN length change in response to the receiving of the change information without performing PDCP reestablishment.

With the above configuration, the delay and loss of the data related to the PDCP can be prevented or reduced, and the deterioration of the performance of the radio communication system can be prevented or reduced.

The present disclosure has been described above. The division of the items in the above description is not essential to the present disclosure, and matters described in two or more items may be combined and used as necessary, and matters described in one item may be applied to matters described in another item (as long as they do not contradict each other).

### <Hardware Structure>

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

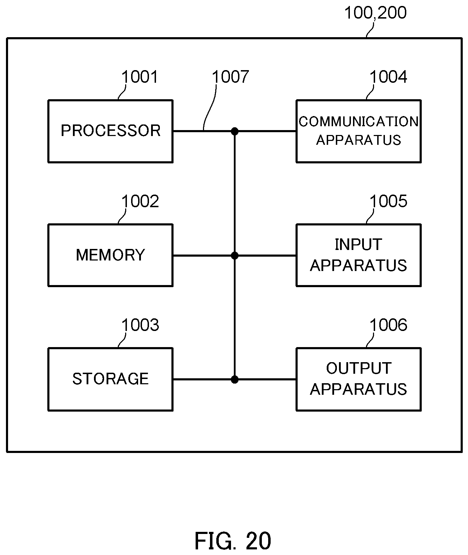

For example, a base station, a terminal, and so on according to one embodiment of the present disclosure may function as a computer that performs the processes of the radio communication method of the present disclosure. FIG. 20 is a diagram to show an example of a hardware structure of a base station and a terminal according to the present embodiment. Physically, the above-described base station 100 and terminal 200 may each be formed as a computer apparatus that includes processor 1001, memory 1002, storage 1003, communication apparatus 1004, input apparatus 1005, output apparatus 1006, bus 1007, and so on.

Note that in the present disclosure, the words such as an apparatus, a circuit, a device, a section, a unit, and so on can be interchangeably interpreted. The hardware structure of base station 100 and terminal 200 may be configured to include one or more of apparatuses illustrated in the drawings, or may be configured not to include part of apparatuses.

Each function of base station 100 and terminals 200 is implemented, for example, by allowing certain software (programs) to be read on hardware such as processor 1001 and memory 1002, and by allowing processor 1001 to perform calculations to control communication via communication apparatus 1004 and control at least one of reading and writing of data in memory 1002 and storage 1003.

Processor 1001 controls the whole computer by, for example, running an operating system. Processor 1001 may be configured with a central processing unit (CPU), which includes interfaces with peripheral apparatus, control apparatus, computing apparatus, a register, and so on. For example, at least part of above-described control section 103, control section 203, and so on may be implemented by processor 1001.

Furthermore, processor 1001 reads programs (program codes), software modules, data, and so on from at least one of storage 1003 and communication apparatus 1004, into memory 1002, and performs various processes according to these. As for the programs, programs to allow computers to perform at least part of the operations of the above-described embodiments are used. For example, control section 203 of terminal 200 may be implemented by control programs that are stored in memory 1002 and that operate on processor 1001, and other functional blocks may be implemented likewise. The various processes have been described to be performed by single processor 1001. However, the processes may be performed by two or more processors 1001 simultaneously or sequentially. Processor 1001 may be implemented by one or more chips. It should be noted that the program may be transmitted from a network via a telecommunication line.

Memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. Memory 1002 may be referred to as a "register," a "cache," a "main memory (primary storage apparatus)" and so on. Memory 1002 can store executable programs (program codes), software modules, and the like for implementing the radio communication method according to one embodiment of the present disclosure.

Storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. Storage 1003 may be referred to as "auxiliary storage apparatus." The above recording medium may be a database including memory 1002 and/or storage 1003, a server, or any other appropriate medium.

Communication apparatus 1004 is hardware (transmitting/receiving device) for allowing inter-computer communication via at least one of wired and wireless networks, and may be referred to as, for example, a "network device," a "network controller," a "network card," a "communication module," and so on. Communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmission section 101, reception section 102, reception section 201, transmission section 202, and the like, may be realized by communication apparatus 1004.

Input apparatus 1005 is an input device that receives input from the outside (for example, a keyboard, a mouse, a microphone, a switch, a button, a sensor, and so on). Output apparatus 1006 is an output device that allows sending output to the outside (for example, a display, a speaker, a Light Emitting Diode (LED) lamp, and so on). Note that input apparatus 1005 and output apparatus 1006 may be provided in an integrated structure (for example, a touch screen).

Furthermore, these types of apparatus, including processor 1001, memory 1002, and others, are connected by bus 1007 for communicating information. Bus 1007 may be formed with a single bus, or may be formed with buses that vary between pieces of apparatus.

Also, base station 100 and terminals 200 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### <Notification and Signaling of Information>

Notification of information is by no means limited to the embodiments described in the present disclosure, and other methods may be used as well. For example, indication of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

### <Application System>

The embodiments illustrated in the present disclosure may be applied to Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New Radio (NR), New radio access (NX), Future generation radio access (FX), W-CDMA (registered trademark), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

### <Processing Procedure and the like>

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

### <Operation of Base Station>

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these. According to the above, a case is described in which there is a single network node other than the base station. However, a combination of multiple other network nodes may be considered (e.g., MME and S-GW).

### <Direction of Input and Output>

The information or signals described in this disclosure may be output from a higher layer (or lower layer) to a lower layer (or higher layer). The information or signals may be input or output through multiple network nodes.

### <Handling of Input and Output Information and the like>

The input or output information may be stored in a specific location (e.g., memory) or managed using management tables. The input or output information may be overwritten, updated, or added. The information that has been output may be deleted. The information that has been input may be transmitted to another apparatus.

### <Determination Method>

A decision or a determination may be realized by a value (0 or 1) represented by one bit, by a boolean value (true or false), or by comparison of numerical values (e.g., comparison with a predetermined values).

### <Variations and the like of Aspects>

Each aspect/embodiment described in the present disclosure may be used independently, may be used in combination, or may be used by switching according to operations. Further, indication (transmission/reporting) of predetermined information (e.g., indication (transmission/reporting) of "X") is not limited to an explicit indication (transmission/reporting), and may be performed by an implicit indication (transmission/reporting) (e.g., by not performing indication (transmission/reporting) of the predetermined information).

As described above, the present invention has been described in detail. It is apparent to a person skilled in the art that the present disclosure is not limited to one or more embodiments of the present disclosure described in the present specification. Modifications, alternatives, replacements, etc., of the present disclosure may be possible without departing from the subject matter and the scope of the present disclosure defined by the descriptions of claims. Therefore, the descriptions of the present specification are for illustrative purposes only, and are not intended to be limitations to the present disclosure.

### <Software>

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

### <Information and Signals>

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

### <System and Network>

As used in the present disclosure, the terms "system" and "network" are used interchangeably.

### <Names of Parameters and Channels>

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

### <Base Station>

In the present disclosure, the terms such as a "base station (BS)," a "radio base station," a "fixed station," a "NodeB," an "eNB (eNodeB)," a "gNB (gNodeB)," an "access point," a "transmission point," a "reception point," a "transmission/reception point," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be referred to as instructing the terminal to perform any control and/or operation based on the information by the base station.

### <Mobile Station>

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

### <Base Station/Mobile Station>

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on. The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a terminal. For example, an embodiment of the present disclosure may be applied to the structure that replaces a communication between a base station and a terminal with a communication between a plurality of terminals (for example, which may be referred to as "Device-to-Device (D2D)," "Vehicle-to-Everything (V2X)," and the like). In this case, terminal 200 may have the functions of base station 100 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the terminal in the present disclosure may be interpreted as base station. In this case, base station 100 may have the functions of terminal 200 described above.

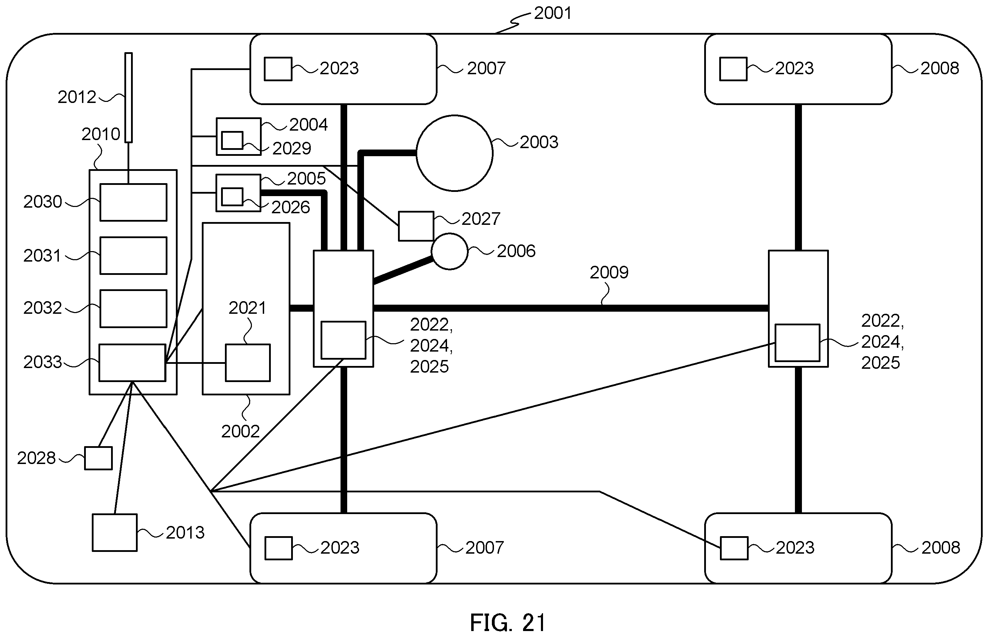

FIG. 21 illustrates an example of a configuration of vehicle 2001. As illustrated in FIG. 21, vehicle 2001 includes drive section 2002, steering section 2003, accelerator pedal 2004, brake pedal 2005, shift lever 2006, front wheel 2007, rear wheel 2008, axle 2009, electronic control section 2010, various sensors 2021 to 2029, information service section 2012, and communication module 2013. The aspects/embodiments described in the present disclosure may be applied to a communication device mounted in vehicle 2001, and may be applied to, for example, communication module 2013.

Drive section 2002 may include, for example, an engine, a motor, and a hybrid of an engine and a motor. Steering section 2003 includes at least a steering wheel and is configured to steer at least one of the front wheel or the rear wheel, based on the operation of the steering wheel operated by the user.

Electronic control section 2010 includes microprocessor 2031, memory (ROM, RAM) 2032, and communication port (IO port) 2033. Electronic control section 2010 receives signals from the various sensors 2021 to 2029 provided in vehicle 2001. Electronic control section 2010 may be referred to as an ECU (Electronic control unit).

Signals from various sensors 2021 to 2029 include a current signal from current sensor 2021 which senses the current of the motor, a front or rear wheel rotation signal acquired by revolution sensor 2022, a front or rear wheel pneumatic signal acquired by pneumatic sensor 2023, a vehicle speed signal acquired by vehicle speed sensor 2024, an acceleration signal acquired by acceleration sensor 2025, a stepped-on accelerator pedal signal acquired by accelerator pedal sensor 2029, a stepped-on brake pedal signal acquired by brake pedal sensor 2026, an operation signal of a shift lever acquired by shift lever sensor 2027, and a detection signal, acquired by object detection sensor 2028, for detecting an obstacle, a vehicle, a pedestrian, and the like.

Information service section 2012 includes various devices for providing (outputting) various kinds of information such as driving information, traffic information, and entertainment information, including a car navigation system, an audio system, a speaker, a television, and a radio, and one or more ECUs controlling these devices. The information service section 2012 provides various types of multimedia information and multimedia services to the occupants of the vehicle 2001 by using information obtained from the external device through the communication module 2013 or the like.

Information service section 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

Driving support system section 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, driving support system section 2030 transmits and receives various types of information via communication module 2013 to realize a driving support function or an autonomous driving function.

Communication module 2013 may communicate with microprocessor 2031 and components of vehicle 2001 via a communication port. For example, communication module 2013 transmits and receives data via communication port 2033, to and from drive section 2002, steering section 2003, accelerator pedal 2004, brake pedal 2005, shift lever 2006, front wheel 2007, rear wheel 2008, axle 2009, microprocessor 2031 and memory (ROM, RAM) 2032 in electronic control section 2010, and sensors 2021 to 29 provided in vehicle 2001.

Communication module 2013 is a communication device that can be controlled by microprocessor 2031 of electronic control section 2010 and that is capable of communicating with external devices. For example, various kinds of information are transmitted to and received from external devices through radio communication. Communication module 2013 may be internal to or external to electronic control section 2010. The external devices may include, for example, a base station, a mobile station, or the like.

Communication module 2013 may transmit at least one of signals from various sensors 2021 to 2029 described above input to electronic control section 2010, information obtained based on the signals, and information based on an input from the outside (a user) obtained via information service section 2012, to the external apparatus via radio communication. Electronic control section 2010, various sensors 2021 to 2029, information service section 2012, and the like may be referred to as input units that receive input. For example, the PUSCH transmitted by communication module 2013 may include information based on the input.

Communication module 2013 receives various types of information (traffic information, signal information, inter-vehicle information, etc.) transmitted from the external devices and displays the received information on information service section 2012 provided in vehicle 2001. Information service section 2012 may be referred to as an output unit that outputs information (for example, outputs information to devices, such as a display and a speaker, based on the PDSCH received by communication module 2013 (or data/information decoded from the PDSCH)).

In addition, communication module 2013 stores the various types of information received from the external devices in memory 2032 available to microprocessor 2031. Based on the information stored in memory 2032, microprocessor 2031 may control drive section 2002, steering section 2003, accelerator pedal 2004, brake pedal 2005, shift lever 2006, front wheel 2007, rear wheel 2008, axle 2009, and sensors 2021 to 2029 mounted in vehicle 2001.

### <Meaning and Interpretation of Terms>

As used herein, the term "determining" may encompass a wide variety of actions. For example, "determining" may be regarded as judging, calculating, computing, processing, deriving, investigating, looking up or search inquiry (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Also, "determining" may be replaced with "assuming," "expecting," "considering," and the like.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access." As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

### <Reference Signal>

A reference signal may be abbreviated as an "RS," and may be referred to as a "pilot" and so on, depending on which standard applies.

### <Meaning of "Based On">

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

### <"First" and "Second">

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

### <Means>

"Means" included in the configuration of each of the above apparatuses may be replaced by "parts," "circuits," "devices," etc.

### <Open Form>

In the case where the terms "include," "including" and variations thereof are used in the present disclosure, these terms are intended to be comprehensive in the same way as the term "comprising." Further, the term "or" used in the present specification is not intended to be an "exclusive or."

### <Time Units such as TTI, Frequency Units such as RB, and Radio Frame Configuration>

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a "Transmission Time Interval (TTI)," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP."

The above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

### <Maximum Transmit Power>

The "maximum transmit power" described in the present disclosure may mean a maximum value of the transmit power, the nominal UE maximum transmit power, or the rated UE maximum transmit power.

### <Article>

In the present disclosure, where an article is added by translation, for example "a," "an," and "the," the disclosure may include that the noun following these articles is plural.

### <"Different">

In this disclosure, the term "A and B are different" may mean "A and B are different from each other." It should be noted that the term "A and B are different" may mean "A and B are different from C." Terms such as "separated" or "combined" may be interpreted in the same way as the above-described "different."

### Industrial Applicability

An aspect of the present disclosure is useful for radio communication systems.

### Reference Signs List

10 Radio communication system
100 Base station
200 Terminal
101, 202 Transmission section
102, 201 Reception section
103, 203 Control section

## Claims

1. A terminal comprising:
a reception section that receives, from a base station, change information indicating a packet data convergence protocol sequence number (PDCP SN) length change from a currently applied PDCP SN length; and
a control section that applies the PDCP SN length change without performing PDCP reestablishment in response to the reception section receiving the change information.

2. The terminal according to claim 1,
wherein the reception section receives, from the base station, timing information indicating a timing to apply the PDCP SN length change, and the control section applies the PDCP SN length change at the timing indicated by the timing information.

3. The terminal according to claim 1,
wherein the control section applies the PDCP SN length change at a timing when the reception section receives a PDCP data packet including information indicating a PDCP SN length after receiving the change information from the base station.

4. The terminal according to claim 1,
wherein the control section applies the PDCP SN length change at a timing when the reception section first receives a PDCP data packet after receiving the change information from the base station.

5. A base station comprising:
a control section that applies a PDCP SN length change from a currently applied PDCP SN length without performing PDCP reestablishment; and
a transmission section that transmits change information indicating the PDCP SN length change to a terminal.

6. A communication control method, comprising:
receiving, by a terminal from a base station, change information indicating a PDCP SN length change from a currently applied PDCP SN length; and
applying, by the terminal, the PDCP SN length change in response to the receiving of the change information without performing PDCP reestablishment.
